Europäisches Patentamt

European Patent Office

Office européen des brevets

(19)

(11) Publication number: **0 367 333**

**A1**

# (12) EUROPEAN PATENT APPLICATION

(21) Application number: **89202666.7**

(22) Date of filing: **23.10.89**

(51) Int. Cl.⁵: **H04B 10/06**

(30) Priority: **31.10.88 NL 8802661**

(43) Date of publication of application:
**09.05.90 Bulletin 90/19**

(84) Designated Contracting States:
**AT CH DE FR GB IT LI NL**

(71) Applicant: **N.V. Philips' Gloeilampenfabrieken**
**Groenewoudseweg 1**
**NL-5621 BA Eindhoven(NL)**

(72) Inventor: **Thus, Franciscus Johannes Maria**
**c/o INT. OCTROOIBUREAU B.V. Prof.**
**Holstlaan 6**
**NL-5656 AA Eindhoven(NL)**

(74) Representative: **Kooiman, Josephus Johannes**
**Antonius et al**
**INTERNATIONAAL OCTROOIBUREAU B.V.**
**Prof. Holstlaan 6**
**NL-5656 AA Eindhoven(NL)**

(54) Remote-controlled receiver with resupply of energy to battery.

(57) In a receiver for use in a remote-control system in which messages are radio-transmitted by means of infrared light, the receiving photodiode circuit is of the forward-biased type and is connected in the forward direction between ground and a voltage which is lower than the knee voltage of the photodiode circuit. As a result, a photocurrent $I_{P0}$ is supplied by the photodiode circuit itself. The low-frequency component of this photocurrent can now be utilized as a charge current for a rechargeable battery. Its lifetime will thus be considerably longer.

FIG.5

**Remote-controlled receiver with resupply of energy to battery.**

## A. Background of the invention

### A(1) Field of the invention

The invention generally relates to a remote-control system in which pulse series used as messages are transmitted from a transmitter to one or more receivers after modulation on a suitably chosen carrier signal. The transmitter usually forms part of a hand-held unit which can be operated by a user, while the receiver forms part of the apparatus to be operated. This may be an audio apparatus, a video apparatus, etc. Nowadays, infrared light is commonly used as a carrier signal.

The invention more particularly relates to a receiver for use in a remote-control system.

For the sake of brevity, the remote-control system will hereinafter be referred to as RC system, the transmitter used therein will be referred to as RC transmitter and the receiver will be referred to as RC receiver.

### A(2) Description of the prior art

In a remote-control system the RC transmitter is provided with a message generator which after a relevant request by the user supplies a message in the form of a series of pulses. The transmission of these pulses to an RC receiver is ensured by an infrared modulation circuit including a photodiode circuit whose irradiated infrared light is modulated by the pulses in the series.

The RC receiver is also provided with a photodiode circuit. It receives the infrared light and modulates the current flowing through it. This current, which is thus modulated, is processed in a signal processing circuit which then supplies the original message again.

Embodiments of the above-mentioned RC transmitters and RC receivers are extensively described in Reference 1. More particularly the signal processing circuit in this known RC receiver has an information signal input which is connected to the anode of the photodiode circuit and to a DC reference voltage input which is connected to ground potential. The two inputs are connected together by means of an inductance which forms part of a resonant circuit. The cathode of the photodiode circuit is connected to the positive terminal of a DC supply source. The photodiode circuit is of the reverse-biased type, i.e. it is intended to be reverse-biased between the DC supply source and ground. The current flowing through this type of photodiode circuit and which is modulated by the incident infrared light is withdrawn from the supply source. The diode circuit in this known RC receiver may thus be considered as a variable resistor whose resistance is dependent on the intensity of the incident light.

These known RC receivers are used in equipment in which the required supply voltages, inter alia ; the RC receiver are usually derived from the mains.

Although these known RC receivers have a high quality, it appears that they are unsatisfactory in those situations in which the required supply voltage is supplied by a battery; for the lifetime of the battery is then found to be unacceptably short.

## B. Object and summary of the invention

It is an object of the invention to render the known RC receivers suitable for supply from a battery, such that the battery has a sufficiently long lifetime.

According to the invention:
- the photodiode circuit is of the forward-biased type;
- a means is provided for generating a DC bias voltage across the photodiode circuit whose direction corresponds to the forward direction of the diode circuit and which is lower than the knee voltage of the photodiode circuit.

A photodiode circuit of the forward-biased type is a circuit intended to be connected in the forward direction to a DC supply source. Unlike the photodiode circuit of the reverse-biased type, in which the current flowing through it is mainly supplied by the DC supply source, a photodiode circuit of the forward-biased type may be considered as a current source which independently generates a so-called photocurrent as a result of the incident infrared light, which photocurrent flows from the cathode towards the anode in this diode circuit. A photodiode circuit of the reverse-biased type thus behaves mainly as a passive element, whereas a photodiode circuit of the forward-biased type mainly behaves as an active element (viz. as a current source).

Experiments with the photodiode circuit of the reverse-biased type have proved that a battery, if used as a DC supply source, has a very short lifetime. This must be ascribed to the fact that not only the infrared light emitted by the RC transmitter gives rise to a current through the photodiode circuit, but also ambient light such as the light of incandescent lamps and sunlight. Such light sources provide a continuous current through the photodiode circuit and therefore lead to the short lifetime of the battery. Since the photodiode circuit chosen is now of the forward-biased type and thus generates a photocurrent itself, this current is not at the expense of the battery. For a good operation the DC bias voltage should be chosen to be such that the photocurrent is given a chance to flow. This is the case if this DC bias voltage is lower than the so-called knee voltage.

The photocurrent comprises a low-frequency component which is caused by the ambient light and a high-frequency component which is caused by the infrared light emitted by the RC transmitter. By applying this photocurrent to a separating filter separating the said high-frequency component from the low-frequency component, the last-mentioned component can be used as a charge current for a rechargeable battery feeding this RC receiver.

## C. References

1. Low-power remote control IR transmitter and receiver preamplifier;
Philips' Electronic Components and Materials;
Technical publication 167, dated 22 March 1985.

2. Philips' Data Handbook Microcontrollers and Peripherals;
Integrated circuits;
Book IC 14 1987, pp. 233-265, particularly 256 and 257.

3. Philips' Data Handbook Semiconductors;
Optoelectronic devices;
Book S8b 1986, page 369.

## D. Explanation of the invention

### D(1) Brief description of the Figures

Fig. 1 shows diagramatically a message as generated by an RC transmitter for transmission to the RC receiver.

Fig. 2 shows diagrammatically the structure of the RC receiver according to the invention.

Fig. 3 shows some characteristic curves for illustrating the relationship between the voltage across a photodiode and the photocurrent flowing through this diode.

Fig. 4 shows diagrammatically a further elaboration of the RC receiver according to the invention.

Fig. 5 shows a practical implementation of the RC receiver shown diagrammatically in Fig. 4.

Fig. 6 shows another practical implementation of the RC receiver shown in Fig. 4.

### D(2) Message format

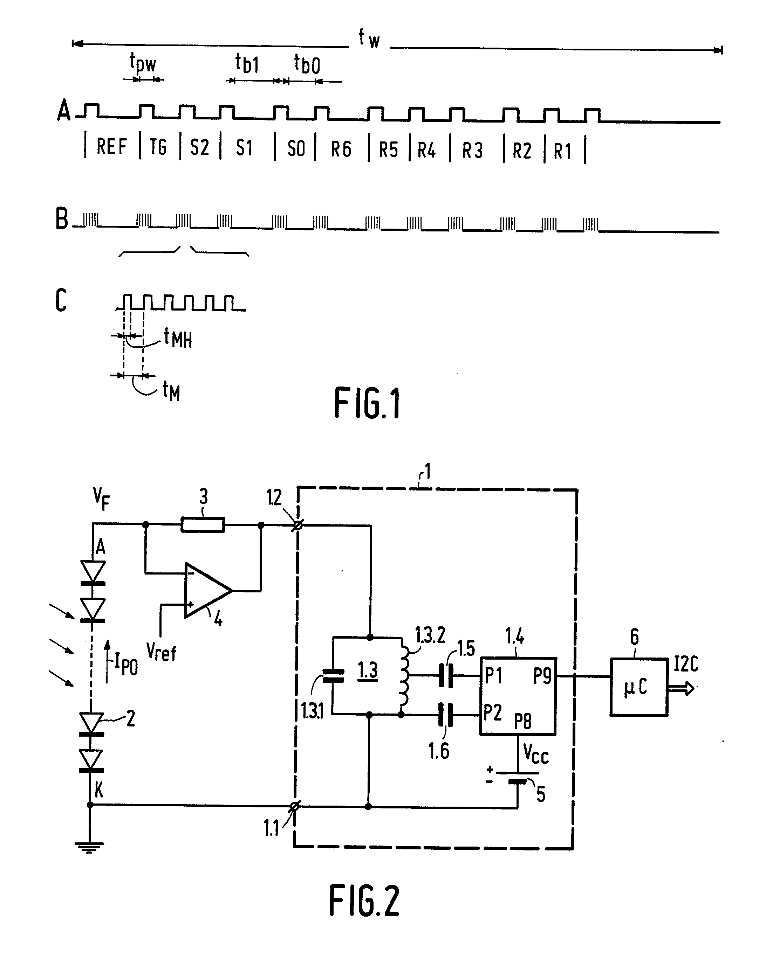

In Fig. 1 a message, which is transmitted from an RC transmitter to an RC receiver, is diagrammatically shown at A. This message is formed in the way as described in Reference 1 and it comprises a reference bit REF, a so-called toggle bit TG, an address word of three address bits S0, S1, S2 and a command word of six command bits R1, R2, ..., R6. The functions of these bits are extensively described in Reference 1 and are irrelevant for a good understanding of the invention. Each bit comprises two pulses having a length $t_{pw}$ and a pulse pause therebetween. The length of this pulse pause determines the logic value of the relevant bit. More particularly, a bit having the logic value "0" is defined by a pulse pause $t_{b0}$ and a bit having the logic value "1" is defined by a pulse pause $t_{b1}$. As is common practice, these pulse pauses are expressed in numbers of clock pulse periods $t_{osc}$ of a reference clock. Some characteristic values are:

clock frequency of reference clock $t_{osc}$ = 455 Hz
clock pulse period of reference clock $t_{osc}$ = 32 $\mu$s
pulse pause for logic "0" $t_{b0}$ = 2240 $t_{osc}$
pulse pause for logic "1" $t_{b1}$ = 3392 $t_{osc}$
pulse length $t_{pw}$ = 64 $t_{osc}$
repetition rate of a message $t_w$ = 55296 $t_{osc}$.

The pulses shown at A in Fig. 1 are firstly modulated on a carrier having a carrier frequency of 38 kHz for transmission to the RC receiver. As a result the signal shown diagrammatically at B in Fig. 1 is obtained in which each pulse with a pulse length $t_{pw}$ is replaced by a train of six modulation pulses having a period $t_M$ = 12 $t_{osc}$ = 26.4 $\mu$s and a pulse width $t_{MH}$ = 4 $t_{osc}$ = 8.8 $\mu$s as is denoted at C in Fig. 1. For the ultimate transmission of the message these modulation pulses are modulated on an infrared carrier.

### D(3) The RC receiver

Fig. 2 shows an embodiment of an RC receiver which is suitable for receiving messages of the format as is particularly shown at B in Fig. 1. The core of this receiver is constituted by a signal processing circuit 1. This circuit has a DC reference voltage input 1.1 which is connected to ground potential and an information signal input 1.2 which receives information signals to be processed. This RC receiver further comprises a photodiode circuit 2 comprising one or more cascade-arranged photodiodes and having an anode A and a cathode K. The kathode K receives the same DC reference voltage, namely ground potential as the DC reference voltage input 1.1 of the signal processing circuit 1. In this embodiment the anode is coupled to the information signal input 1.2 of the signal processing circuit 1 via a resistor 3. This resistor 3 is shunted by an operational amplifier 4. More particularly, the output of this operational amplifier 4 is connected to its inverting input by means of this resistor 3, while a positive DC reference voltage $V_{ref}$ is applied to its non-inverting input ($+$). As a result, a DC bias voltage $V_F$ (usually referred to as anode voltage) which is equal to $V_{ref}$ is produced at the anode of the photodiode circuit 2.

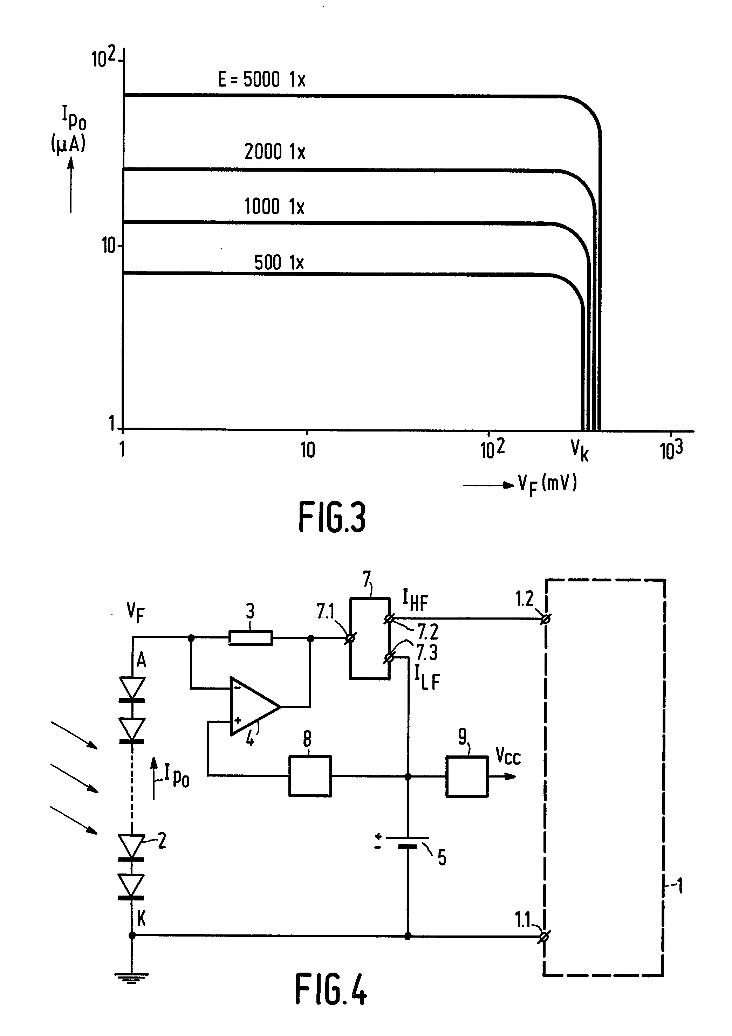

If infrared light is incident on the diode circuit, a photocurrent $I_{p0}$ starts to flow through this photodiode circuit 2 in a direction from cathode to anode. The value of this photocurrent is considerably dependent on the intensity E of the incident light, but is comparatively independent of the anode voltage $V_F$ as long as it remains below a so-called knee voltage $V_K$. In fact, close to this knee voltage, this photocurrent decreases considerably to a value of zero. This general behaviour of a photodiode circuit is shown for a photodiode circuit comprising one photodiode (namely the PBX 40 marketed by Philips) for different intensities E of the incident infrared light in Fig. 3. It is to be noted that this Fig. 3 is identical to Fig. 2 which is shown on page 369 of Reference 3 in which a logarithmic scale is taken for the anode voltage $V_F$.

In the RC receiver shown in Fig. 2 the resistor 3 and the operational amplifier 4 ensure that the anode voltage $V_F$ does not become larger than $V_{ref}$ which in its turn is smaller than the knee voltage $V_K$ of the photodiode circuit. Under all circumstances the photocurrent $I_{p0}$ then continues to flow from a point with ground potential via the diode circuit 2 towards the information signal input 1.2 of the signal processing circuit 1. Unlike the RC receiver described in Reference 1, this photocurrent is not withdrawn from a battery which functions as a supply source but is supplied by the diode circuit itself.

If the RC transmitter transmits a message which has the format shown at B in Fig. 1 and is modulated on infrared light, the photocurrent will have the same pulsatory character as the modulated message. In order to regain the format of the message shown at A in Fig. 1, this photocurrent $I_{p0}$ in the signal processing circuit 1 is firstly applied to a resonant circuit 1.3 which is constituted by a parallel arrangement of a capacitor 1.3.1 having a capacitance C and a coil 1.3.2 having an inductance L. The magnitudes C and L are chosen to be such that the resonance frequency of this resonant circuit is 38 kHz and thus corresponds to the rate at which the clock pulses occur in the message (compare B and C in Fig. 1).

The signal processing circuit 1 also comprises an IC circuit 1.4 having input ports P1 and P2, a DC supply port P8 and an output port P9. This embodiment is based on the assumption that this IC circuit is constituted by the TDA 3047 or TDA 3048, so that this signal processing circuit 1 largely corresponds to the RC receiver as extensively described in Reference 1. More particularly, the input port P1 is connected via a capacitor 1.5 to a central tapping of coil 1.3.2 and input port P2 is connected to ground potential via a capacitor 1.6. DC supply port P8 receives a DC supply voltage $V_{cc}$ which is supplied in this embodiment by a source 5 in the form of a battery. Output port P9 supplies the received message in the format as shown at A in Fig. 1. The message thus obtained is applied for further processing to a control circuit 6. It may be assumed that this circuit is formed in such a way that it can convert the format of the received message in order to be able to transmit it in a bus format to the relevant circuits. This is effected via the data bus which is denoted by I2C in Fig. 2.

A microcomputer is particularly suitable as a control circuit. Many commercially available microcomputers are suitable, for example the microcomputer PCB 83 C552 which is marketed by Philips and is extensively described in Reference 2. When using this microcomputer, the messages supplied by IC circuit 1.4 are applied to the so-called Interrupt input (pin 26 or 27) of the microcomputer.

Besides the infrared light emitted by the RC transmitter, ambient light such as sunlight and light of incandescent lamps produces a photocurrent having components of a considerably lower frequency than the photocurrent which is produced by a transmitted message. The first-mentioned components will be referred to as low-frequency photocurrent, the other components wil be referred to as high-frequency photocurrent. The low-frequency photocurrent does not contribute to the signal which is applied to the input port P1 of IC circuit 1.4 via capacitor 1.5 because it is depleted to ground via coil 1.3.2.

However, this low-frequency photocurrent can also be used usefully, namely for charging a rechargeable battery. To realise this, for example, a separating filter 7 may be arranged between resistor 3 and information signal input 1.2, as is diagrammatically shown in Fig. 4, which separating filter receives the total photocurrent at an input 7.1, supplies the high-frequency photoourrent $I_{HF}$ at its output 7.2 and the low-frequency photocurrent $I_{LF}$ at its output 7.3. The latter current is applied to the power supply source 5 in the form of a rechargeable battery. This power supply source 5 is further connected to the non-inverting input ($+$) of the operational amplifier 4 via a voltage divider circuit 8 and to the DC supply port P8 of IC circuit 1.4 via a voltage divider circuit 9.

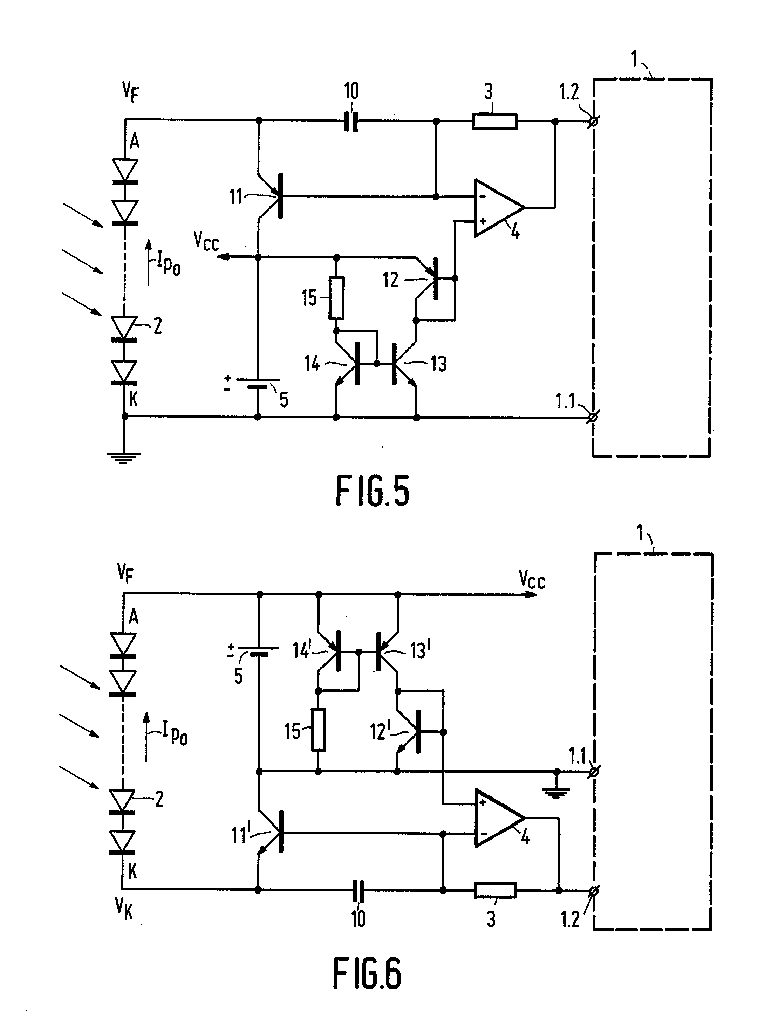

Fig. 5 shows a practical realisation of the embodiment shown diagrammatically in Fig. 4. This embodiment is characterized in that the functions of resistor 3, operational amplifier 4, separating filter 7 and voltage divider circuit 8 are combined in one circuit whose core is constituted by the operational amplifier 4. Its output is again connected to its inverting input (-) via the resistor 3. The last-mentioned input is now also connected to the anode A of the photodiode circuit 2 via a capacitor 10, as well as to the base of a transistor 11. Its emitter is also connected to the anode A of the photodiode circuit 2, while its collector is connected to the positive terminal of the power supply source 5 in the form of a rechargeable battery. The voltage at this positive terminal also constitutes the DC supply voltage $V_{cc}$. The negative terminal of this power supply source 5 is connected to ground potential. Its positive terminal is also connected to the emitter of a transistor 12 arranged as a diode. Its base is connected to the non-inverting input (+) of the operational amplifier 4, while its collector circuit incorporates a current source circuit. This circuit comprises two transistors 13 and 14 arranged as a current mirror, the collector of transistor 14 being also connected to the positive terminal of the power supply source 5 via a resistor 15. In this way it is achieved that the non-inverting input (+) of the operational amplifier conveys a voltage which is equal to that of the power supply source 5 and that the anode voltage $V_F$ constantly exceeds the supply voltage by an amount of $\Delta V_{BE}$. This amount $\Delta V_{BE}$ is supplied by the difference in voltage across the base-emitter junctions of transistors 11 and 12. As a result of this and because of the fact that capacitor 10 blocks the passage of the low-frequency photocurrent to the information signal input 1.2, this low-frequency photocurrent is applied to the power supply source 5 via transistor 11. The passage of the high-frequency photocurrent is not blocked by capacitor 10 and is thus applied to the information signal input 1.2 via resistor 3.

Another practical embodiment of the RC receiver is shown diagrammatically in Fig. 6. This embodiment is derived from the embodiment shown in Fig. 5 by replacing the PNP transistors by NPN transistors, and conversely. In this Fig. 6 elements corresponding to those in Fig. 5 have the same reference numerals.

Here again the core of the circuit is constituted by the operational amplifier 4. Its output is connected to its inverting input (-) via the resistor 3. the last-mentioned input is also connected to the cathode K of the photodiode circuit 2 via the capacitor 10, as well as to the base of a transistor 11'. Its emitter is also connected to the cathode K of the photodiode circuit 2, while its collector is connected to the negative terminal of the power supply source 5 in the form of a rechargeable battery. This negative terminal is also connected to ground potential. The positive terminal of the battery supplies the desired DC supply voltage $V_{cc}$ for the other circuits of the RC receiver and is connected to the anode of the photodiode circuit 2. Furthermore, the negative terminal of the battery is connected to the emitter of a transistor 12' arranged as a diode whose base is connected to the non-inverting input (+) of the operational amplifier 4. The collector circuit of this transistor 12' incorporates a current source circuit comprising two transistors 13' and 14' arranged as a current mirror. The emitters of these transistors 13' and 14' are connected to the positive terminal of the battery, while the collector of transistor 14' is connected to ground potential via the resistor 15. In this way it is achieved that the non-inverting input (+) of the operational amplifier 4 conveys a voltage which exceeds ground potential by an amount of $V_{BE}$. This amount $V_{BE}$ is supplied by the base-emitter junction of transistor 12'. The cathode voltage $V_K$ of the photodiode circuit is constantly lower by an amount of $V'_{BE}$ than the voltage at the non-inverting input (+). This amount $V'_{BE}$ is a result of the base-emitter junction of transistor 11'. For a satisfactory operation of this RC receiver it is ensured that $V'_{BE}$ is larger than $V_{BE}$, so that the photocurrent indeed starts flowing towards the positive terminal of the battery.

## Claims

1. A receiver for use in a remote-control system in which messages are radio-transmitted from a transmitter to said receiver, which purpose said messages are modulated on a carrier signal in the form of infrared light, said receiver comprising:
- a photodiode circuit comprising an anode and a cathode and being sensitive to infrared light for converting said infrared light into an electric current;
- a signal processing circuit having an information signal input which is coupled to the anode of the photodiode circuit for regaining the original message transmitted by the transmitter, characterized in that
- the photodiode circuit is of the forward-biased type in which a photocurrent is generated by means of incident infrared light;
- means are provided for generating a DC bias voltage across the photodiode circuit whose direction corresponds to the forward direction of the photodiode circuit and which is lower than the knee voltage the photodiode circuit.

2. A receiver as claimed in Claim 1, characterized in that said means comprise an operational amplifier having an inverting and a non-inverting input and an output, the inverting input being coupled to the anode of the photodiode circuit and to the output of the operational amplifier via a feedback network, and the non-inverting input receiving a first DC reference voltage.

3. A receiver as claimed in Claim 2, characterized in that the first DC reference voltage is derived from a DC supply source having a positive and a negative terminal, the negative terminal receiving a second DC reference voltage.

4. A receiver as claimed in Claim 3, characterized in that the said DC supply source is constituted by a rechargeable DC supply source and in that means are provided for separating the high-frequency and low-frequency components of the photocurrent and means for applying the low-frequency components as a charge current to the rechargeable DC supply source.

FIG.1

FIG.2

FIG.3

FIG.4

FIG.5

FIG.6

3-Ⅲ-PHN 12721

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | ELEKTOR, vol. 9, no. 3, March 1983, Canterbury, GB; "O,IC! Using Photodiodes", pages 352-355 <br> * Page 353, lines 11-42; figure 2 * | 1 | H 04 B 10/06 |
| Y | PATENT ABSTRACTS OF JAPAN, vol. 9, no. 136 (E-320)[1859]; & JP-A-60 20 654 (IWASAKI TSUSHINKI K.K.) <br> * Abstract * | 1 | |
| A | IDEM | 2 | |
| A | PATENT ABSTRACTS OF JAPAN, vol. 10, no. 325 (E-451)[2381]; & JP-A-61 131 628 (ROHM CO. LTD) <br> * Abstract * | 1 | |
| A | EP-A-0 082 347 (WILHELM RUF K.G.) <br> * Abstract; figure 1 * | 1 | |
| A | TOUTE L'ELECTRONIQUE, vol. 36, no. 332; R. DAMAYE: "Les applications de l'opto-electronique" <br> * Pages 21-25; figure 12a * | 1 | TECHNICAL FIELDS SEARCHED (Int. Cl.5) <br><br> H 04 B <br> H 03 J <br> H 03 F <br> G 08 C <br> G 01 J |
| A | GB-A-2 201 068 (A.W. DAVIES) <br> * Abstract; figure 3 * | 1 | |
| X,P | EP-A-0 304 997 (PHILIPS) <br> * The whole document * | 1 | |

The present search report has been drawn up for all claims

| Place of search | Date of completion of the search | Examiner |
|---|---|---|
| THE HAGUE | 06-02-1990 | GASTALDI G.L. |